# EUROPEAN PATENT SPECIFICATION

(11) **EP 0 344 867 B1**
(45) Date of publication and mention of the grant of the patent: **24.08.1994**
(21) Application number: 89201403.6
(22) Date of filing: 02.06.1989
(51) Int. Cl.: A23L 1/18, A21B 5/02

(54) **Method for producing roasted grain or granular food products and a machine for use in such a method**
Verfahren zur Herstellung von geröstetem Getreide oder körnigen Nahrungsmitteln und eine Vorrichtung zur Verwendung in dem genannten Verfahren
Procédé pour la préparation de produits alimentaires grillés a base de céréales et installation pour la mise en oeuvre de celui-ci

(30) Priority: 03.06.1988 NL 8801432
(43) Date of publication of application: 06.12.1989
(73) Proprietor: SANDOZ NUTRITION LTD., 3007 Berne (CH)
(72) Inventor: van Woerden, Johannes, NL-6741 EA Lunteren (NL)
(74) Representative: van der Saag, Johannes

(56) References cited:
- WO-A-88/06425
- BE-A- 868 361
- BE-A- 901 492

## Description

The invention relates to a method for producing roasted grain or granular food products,as defined in the preamble of claim 1.

The invention relates further to a machine for use in such a method.

A method for producing roasted grain or granular food products according to the opening paragraph is, for the contracting state ES known from BE-A- 901.492 and for the contracting states BE, DE, FR, GB, IT, LU, NL and SE described in WO-A-8806425 which forms prior art under Art. 54 (3) EPC. In these methods the parts of the machine forming the moulding cavity are in mechanical contact with each other to provide a hermetically sealed moulding cavity. In other words, when forming the moulding cavity these parts of the machine form a seat. Such a seat constitutes a source of malfunctions to the proper working of the machine, as remnants of the roasted or to be roasted material accumulate there.

The invention aims to improve the above-described situation. According to the invention, this has been attained by providing a method as defined in the opening paragraph which method is characterized according to the characterizing portion of claim 1.

These measures have rendered the method less sensitive for malfunctions since the machine is seatless, so that it can no longer be polluted by accumulated remnants.

If a machine for producing roasted grain or granular food products for use in a method according to the invention, which machine comprises slide means for placing the material that is to be roasted on the lower die as well as for discharging the roasted food product, and driving means for alternately changing the positions of the upper and lower dies and the sleeve, which are related to the opening position and the pressing and roasting position, as well as for driving the slide means, is characterized in that the inner periphery of the sleeve comprises bevelled inner edges, moreover air flows occur over and under the obtained food product when opening the moulding cavity, which air flows blow away said remnants of the roasted or to be roasted material, thus reducing the pollution in the immediate vicinity of the moulding cavity even further.

The invention will be elucidated hereinafter on the basis of the drawing, in which by means of seven figures a production cycle for a roasted food product is represented.

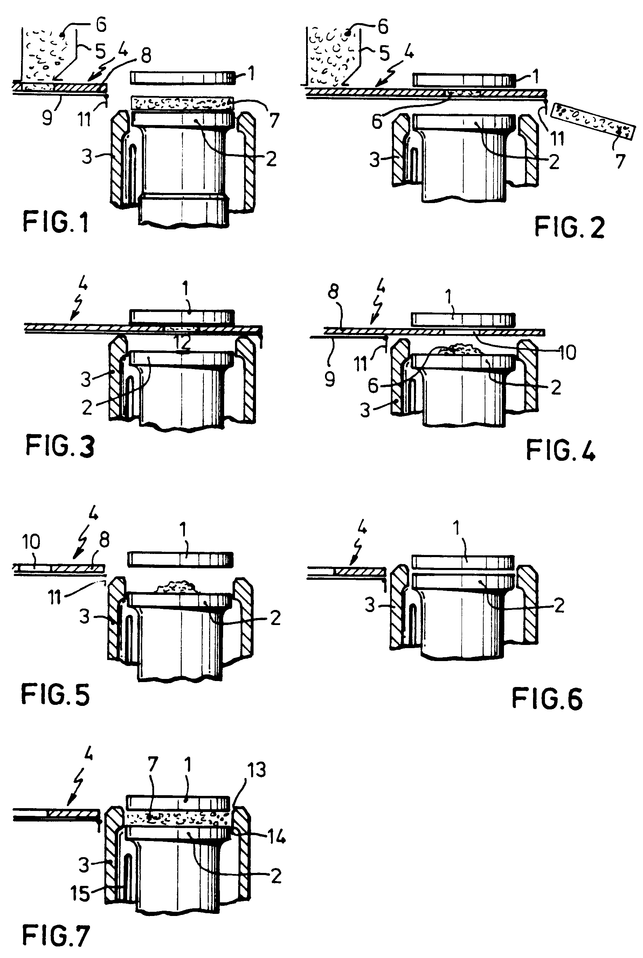

Figure 1-7 show a fixedly mounted heatable upper die 1, a reciprocable heatable lower die 2, a reciprocable sleeve, and a slide means 4.

Figures 1 and 2 also represent a supply container 5 with material to be roasted 6, and a roasted food product 7.

The slide means 4 comprises a slide 8 with at least one space 10 (figures 4 and 5) to be opened by a plate 9 for receiving the material to be roasted. A flap valve is mounted on the plate.

The lower die 2 is in the lower position in figures 1-5, in the pressing position in figure 6, and in the roasting position in figure 7.

The sleeve is in the open position in figures 1-5 and in the position for pressing or roasting, respectively, in figures 6 and 7.

The driving and heating means have not been shown as they can be of generally known design and they are not considered relevant to the present invention.

The machine is operated as follows. In figure 1, roasting has just been terminated. If the slide 8 and the plate 9 of the slide means 4 move from the position of figure 1 to the position of figure 2, the roasted food product 7 is ejected by the flap valve 11, and through the space 10 of the slide 8 a measured quantitiy of material to be roasted 6 is brought above the lower die 2. The sleeve 3 now moves up from the position of figure 2 to the position of figure 3, so that a moulding cavity 12 (figure 3) is created.

The plate 9 is now moved from the position of figure 3 to the position of figure 4, so that the material to be roasted 6 drops into the moulding cavity 12. During this motion of the plate 9 the flap valve 11 temporarily assumes a substantially horizontal position.

Subsequently, the slide 8 also moves back (figure 5). After the lower die 2 and the sleeve 3 are moved upwardly together, pressing begins. At a certain point the lower die 2 is suddenly moved downwards (figure 7), and roasting is effected.

The roasted food product 7 is subsequently discharged in the manner discussed in figure 1.

Figure 7 furthermore shows that the portion of the sleeve 3 that seals the moulding cavity 12 during roasting (and thus also during pressing), comprises bevelled inner edges 13 and 14 that create air flows upon opening the moulding cavity 12, which air flows blow away the remnants of the roasted or to be roasted material.

The invented machine is also quite suited for establishing the cooperation between a plurality of upper and lower dies and sleeves with one sliding means, so that a number of food products to be roasted are made in one processing cycle. In so far as new pollution or blockage problems may occur, these can easily be controlled by applying slots that can simply be cleaned from outside the machine.

## Claims (Claims for the following Contracting State(s): BE, DE, FR, GB, IT, LU, NL, SE)

1. Method for producing roasted grain or granular food products (7), such as rice cakes, in which method a machine for producing roasted grain or granular food products is used, said machine comprising a rigidly mounted upper die (1), as well as a lower die (2) and a sleeve (3) that are independently movable, which method comprises the steps of placing the material to be roasted on the lower die in a low position, moving the lower die upwards from the low position in a direction towards the upper die to a pressing position in which the material to be roasted is pressed between the upper and lower die, moving the lower die downwards to a roasting position, roasting the material to be roasted, and moving the lower die downwards to the low position, moving the sleeve from an open position in which the material is placed on the lower die in a direction towards the upper die to a closing position in which the dies and the sleeve define together at least one moulding cavity (12) in which moulding cavity the material to be roasted is kept while pressing and roasting the material, and moving the sleeve to the opening position and discharging the roasted food product, **characterized in that** the sleeve is moved towards the upper die (1) into the closing position in which the sleeve is located at a distance from the upper die, so as to form a non-hermetically sealed moulding cavity, and in that the periphery of the upper die is parallel to the moving direction of the sleeve.

2. Machine for producing roasted grain or granular food products for use in a method as claimed in claim 1, said machine comprising slide means (4) for placing the material that is to be roasted on the lower die as well as for discharging the roasted food product, and driving means for alternately changing the positions of the upper and lower dies and the sleeve, which are related to the opening position and the pressing and roasting position, as well as for driving the slide means, **characterized in that** the inner periphery of the sleeve (3) comprises bevelled inner edges (13, 14).

## Claims (Claims for the following Contracting State(s): ES)

1. Method for producing roasted grain or granular food products (7), such as rice cakes, in which method a machine for producing roasted grain or granular food products is used, said machine comprising a rigidly mounted upper die (1), as well as a lower die (2) and a sleeve (3) that are movable, which method comprises the steps of placing the material to be roasted on the lower die in a low position, moving the lower die upwards from the low position in a direction towards the upper die to a pressing position in which the material to be roasted is pressed between the upper and lower die, moving the lower die downwards to a roasting position, roasting the material to be roasted, and moving the lower die downwards to the low position, moving the sleeve from an open position in which the material is placed on the lower die in a direction towards the upper die to a closing position in which the dies and the sleeve define together at least one moulding cavity (12) in which moulding cavity the material to be roasted is kept while pressing and roasting the material, and moving the sleeve to the opening position and discharging the roasted food product, **characterized in that** the lower die (2) and the sleeve (3) are moved independently, in that the sleeve is moved towards the upper die (1) into the closing position in which the sleeve is located at a distance from the upper die so as to form a non-hermetically sealed moulding cavity, and in that the periphery of the upper die is parallel to the moving direction of the sleeve.

2. Machine for producing roasted grain or granular food products for use in a method as claimed in claim 1, said machine comprising slide means (4) for placing the material that is to be roasted on the lower die as well as for discharging the roasted food product, and driving means for alternately changing the positions of the upper and lower dies and the sleeve, which are related to the opening position and the pressing and roasting position, as well as for driving the slide means, **characterized in that** the inner periphery of the sleeve (3) comprises bevelled inner edges (13, 14).

## Patentansprüche (Patentansprüche für folgende(n) Vertragsstaat(en): BE, DE, FR, GB, IT, LU, NL, SE)

1. Verfahren zur Herstellung von gerösteten, körnigen oder granulösen Nahrungsmitteln (7) wie Reiskuchen, in welchem Verfahren eine Maschine zur Herstellung von gerösteten, körnigen oder granulösen Nahrungsmitteln gebraucht wird, wobei die Maschine eine fest angebrachte obere Form (1), sowie eine untere Form (2) und eine Muffe (3) die unabhängig bewegbar sind, aufweist, welches Verfahren die Schritte umfasst: das Aufstellen des zu röstenden Materials auf die untere Form in eine niedrige Position, das Bewegen der unteren Form von der niedrigen Position in eine Richtung auf die obere Form zu, in eine Druckposition in welcher das zu röstende Material zwischen der oberen und unteren Form gedrückt wird, das Hinunterbewegen der unteren Form in eine Röstposition, das Rösten des zu röstenden Materials, und das Hinunterbewegen der unteren Form zu der niedrigen Position, das Bewegen der Muffe von einer offenen Position, in welcher das Material auf die untere Form aufgestellt wird, in eine Richtung auf die obere Form zu, zu einer schliessenden Position, in welcher die Formen und die Muffe zusammen zumindest einen Hohlraum (12) bilden, in welchem Hohlraum das zu röstenden Material gehalten wird, während das Material gedrückt und geröstet wird, und das Bewegen der Muffe zur öffenenden Position und das Abführen des gerösteten Nahrungsmittels, **dadurch gekennzeichnet,** daß die Muffe (3) auf die obere Form (1) zu in der schliessenden Position bewogen wird, in welcher die Muffe in einem Abstand von der oberen Form gelegen ist, um einen nicht-hermetisch abgedichteten Hohlraum zu bilden, und daß die Peripherie der oberen Form mit der Bewegungsrichtung der Muffe gleichlaufend ist.

2. Maschine zur Herstellung von gerösteten, körnigen oder granulösen Nahrungsmitteln zum Gebrauch in einem dem Anspruch 1 gemäß beanspruchten Verfahrens, wobei die Maschine Schiebemittel (4) zur Aufstellung des zu rösten-den Materials auf die untere Form, wie auch zur Abführung des gerösteten Nahrungsmittelprodukts, aufweist, und Antriebsmittel um abwechselnd die Positionen der oberen und unteren Formen und der Muffe, die zu der öffnenden Position und der Druck- und Röstposition verwandt sind, zu ändern, sowie um die Schiebemittel anzutreiben, **dadurch gekennzeichnet,** daß die innere Peripherie der Muffe (3) abgeschrägte Kanten (13, 14) umfasst.

## Patentansprüche (Patentansprüche für folgende(n) Vertragsstaat(en): ES)

1. Verfahren zur Herstellung von gerösteten, körnigen oder granulösen Nahrungsmitteln (7) wie Reiskuchen, in welchem Verfahren eine Maschine zur Herstellung von gerösteten, körnigen oder granulösen Nahrungsmitteln gebraucht wird, wobei die Maschine eine fest angebrachte obere Form (1), sowie eine untere Form (2) und eine Muffe (3) die bewegbar sind, aufweist, welches Verfahren die Schritte umfasst: das Aufstellen des zu röstenden Materials auf die untere Form in eine niedrige Position, das Bewegen der unteren Form von der niedrigen Position in eine Richtung auf die obere Form zu, in eine Druckposition in welcher das zu röstende Material zwischen der oberen und unteren Form gedrückt wird, das Hinunterbewegen der unteren Form in eine Röstposition, das Rösten des zu röstenden Materials, und das Hinunterbewegen der unteren Form zu der niedrigen Position, das Bewegen der Muffe von einer offenen Position, in welcher das Material auf die untere Form aufgestellt wird, in eine Richtung auf die obere Form zu, zu einer schliessenden Position, in welcher die Formen und die Muffe zusammen zumindest einen Hohlraum (12) bilden, in welchem Hohlraum das zu röstenden Material gehalten wird, während das Material gedrückt und geröstet wird, und das Bewegen der Muffe zur öffnenden Position und das Abführen des gerösteten Nahrungsmittels, **dadurch gekennzeichnet**, daß die untere Form (2) und die Muffe (3) unabhängig bewogen werden, daß die Muffe auf die obere Form (1) zu, in der schliessenden Position bewogen wird, in welcher die Muffe in einem Abstand von der oberen Form gelegen ist, um einen nicht-hermetisch abgedichteten Hohlraum zu bilden, und daß die Peripherie der oberen Form mit der Bewegungsrichtung der Muffe gleichlaufend ist.

2. Maschine zur Herstellung von gerösteten, körnigen oder granulösen Nahrungsmitteln zum Gebrauch in einem dem Anspruch 1 gemäß beanspruchten Verfahrens, wobei die Maschine Schiebemittel (4) zur Aufstellung des zu röstenden Materials auf die untere Form, wie auch zur Abführung des gerösteten Nahrungsmittelprodukts, aufweist, und Antriebsmittel um abwechselnd die Positionen der oberen und unteren Formen und der Muffe, die zu der öffnenden Position und der Druck- und Röstposition gehören, zu ändern, sowie um die Schiebemittel anzutreiben, **dadurch gekennzeichnet**, daß die innere Peripherie der Muffe (3) abgeschrägte Kanten (13, 14) umfasst.

## Revendications (Revendications pour l'(les) Etat(s) contractant(s) suivant(s): BE, DE, FR, GB, IT, LU, NL, SE)

1. Procédé pour la préparation de produits alimentaires grillés à base de céréales (7), tels que des galettes de riz, selon lequel on utilise une installation pour la préparation de produits alimentaires grillés à base de céréales, ladite installation comprenant un moule supérieur dont le montage est fixe (1), un moule inférieur (2), et une douille (3) qui sont déplaçables indépendamment l'un de l'autre, lequel procédé comprend les étapes consistant à placer la matière à griller dans le moule inférieur en position basse, à faire remonter le moule inférieur vers le moule supérieur pour qu'il passe de la position basse en position de compression qui permet de comprimer la matière à griller entre le moule inférieur et le moule supérieur, à faire redescendre le moule inférieur en position de grillage, à griller la matière à griller, à faire redescendre le moule inférieur en position basse, à faire remonter vers le moule supérieur la douille de la position ouverte, qui permet de placer la matière dans le moule inférieur, en position fermée selon laquelle les moules et la douille définissent ensemble au moins une cavité de moulage (12), dans laquelle la matière à griller est maintenue au cours de la compression et du grillage de la matière, à mettre la douille en position ouverte et à décharger le produit alimentaire grillé, **caractérisé en ce que** la douille en montant vers le moule supérieur (1) se met en position fermée et se trouve alors à une certaine distance du moule supérieur, de sorte à former une cavité de moulage fermée non hermétiquement, et en ce que la surface extérieure du moule supérieur est parallèle au sens de déplacement de la douille.

2. Installation de préparation de produits alimentaires grillés à base de céréales pour la mise en oeuvre d'un procédé tel que revendiqué à la Revendication 1, ladite installation comprenant des moyens coulissants (4) permettant de placer la matière à griller dans le moule inférieur et de décharger le produit alimentaire grillé, et des moyens de déplacement pour changer alternativement les positions des moules inférieur et supérieur et de la douille, qui sont fonction des positions d'ouverture, de compression et de grillage, et permettant également de déplacer les moyens coulissants, **caractérisée en ce que** la surface intérieure de la douille (3) comprend des bords intérieurs biseautés (13, 14).

## Revendications (Revendications pour l'(les) Etat(s) contractant(s) suivant(s): ES)

1. Procédé pour la préparation de produits alimentaires grillés à base de céréales (7), tels que des galettes de riz, selon lequel on utilise une installation pour la préparation de produits alimentaires grillés à base de céréales, ladite installation comprenant un moule supérieur dont le montage est fixe (1), un moule inférieur (2), et une douille (3) qui sont déplaçables indépendamment l'un de l'autre, lequel procédé comprend les étapes consistant à placer la matière à griller dans le moule inférieur en position basse, à faire remonter le moule inférieur vers le moule supérieur pour qu'il passe de position basse en position de compression qui permet de comprimer la matière à griller entre le moule inférieur et le moule supérieur, à faire redescendre le moule inférieur en position de grillage, à griller la matière à griller, à faire redescendre le moule inférieur en position basse, à faire remonter vers le moule supérieur la douille de la position ouverte, qui permet de placer la matière dans le moule inférieur, en position fermée selon laquelle les moules et la douille définissent ensemble au moins une cavité de moulage (12), dans laquelle la matière à griller est maintenue au cours de la compression et du grillage de la matière, à mettre la douille en position ouverte et à décharger le produit alimentaire grillé, **caractérisé en ce que** le moule inférieur (2) et la douille (3) sont déplacés séparément, en ce que la douille en montant vers le moule supérieur (1) se met en position fermée et se trouve alors à une certaine distance du moule supérieur, de sorte à former une cavité de moulage fermée non hermétiquement, et en ce que la surface extérieure du moule supérieur est parallèle au sens de déplacement de la douille.

2. Installation de préparation de produits alimentaires grillés à base de céréales pour la mise en oeuvre d'un procédé tel que revendiqué à la Revendication 1, ladite installation comprenant des moyens coulissants (4) permettant de placer la matière à griller dans le moule inférieur et de décharger le produit alimentaire grillé, et des moyens de déplacement pour changer alternativement les positions des moules inférieur et supérieur et de la douille, qui sont fonction des positions d'ouverture, de compression et de grillage, et permettant également de déplacer les moyens coulissants, **caractérisée en ce que** la surface intérieure de la douille (3) comprend des bords intérieurs biseautés (13, 14).
